# EUROPÄISCHE PATENTSCHRIFT

(11) **EP 2 223 640 B1**
(45) Veröffentlichungstag und Bekanntmachung des Hinweises auf die Patenterteilung: **14.08.2013**
(21) Anmeldenummer: 10153907.0
(22) Anmeldetag: 18.02.2010
(51) Int. Cl.: A47J 31/36

(54) **Kaffeepadmaschine mit Bypass**
Coffee pod machine with bypass
Machine à dosette de café avec bypass

(30) Priorität: 26.02.2009 DE 102009001198
(43) Veröffentlichungstag der Anmeldung: 01.09.2010
(73) Patentinhaber: BSH Bosch und Siemens Hausgeräte GmbH, 81739 München (DE)
(72) Erfinder: Daburger, Josef, 83313 Siegsdorf-Hammer (DE); Hauser, Andreas, 83370 Seeon (DE); Jaskolka, Robert, 83395 Freilassing (DE); Mathes, Anton, 83364 Neukirchen am Teisenberg (DE)

(56) Entgegenhaltungen:
- EP-A1- 0 806 168
- WO-A1-03/030696
- WO-A2-02/074144

## Beschreibung

Die Erfindung betrifft eine Kaffeepadmaschine mit einer Brühkammer zur Aufnahme und zum Auslaugen eines Kaffeepads, mit einem Bedlenungshebel zum Öffnen bzw. Verschließen der Brühkammer und mit einer Düse, einem so genannten Cremaventil, zur Abgabe eines Kaffeegetränks unter Druck. Die Erfindung ist nicht beschränkt auf Kaffeemaschinen für schlaffe, in Filterpapier verpackte Kalfeeporlionen, so genannte Kaffeepads, sondern kann In jeglichen Getränkemaschinen zum Einsatz kommen, in denen vorportionierte und verpackte Getränkesubstratportionen verarbeitet werden können. Lediglich der Einfachheit halber wird im Folgenden stellvertretend für die verpackten Getränkesubstratportionen der Begriff "Pad" bzw. beispielhaft "Kaffeepad" verwendet.

Eine Kaffeepadmaschine zeigt beispielsweise die DE 10 2004 004 834 A1. In eine entnehmbare Schublade kann ein Kaffeepad eingelegt werden. Die Schublade enthält dafür einen Padhalter, der ein Brühkammerunterteil darstellt. Er kann samt Schublade in die Maschine im Wesentlichen horizontal eingeschoben werden. Nach dem Einschieben wird die Schublade mit einem Badlenungshebel verriegelt. Bei diesem Bedienungsschritt wird zugleich der Padhalter als Brühkammerunterteil mit einem Brühkammeroberteil druckdicht verbunden. Daraufhin kann jetzt die Kaffeezubereitung durch Auslaugen des Kaffeepads mit Heißwasser erfolgen, Nach Abschluss des Brühvorgangs kann noch ein gewisser Überdruck in der Brühkammer vorliegen. Beim Öffnen der Brühkammer unter Druck kann es zu einem unerwünschten Austritt von Heißwasser oder Dampf kommen.

Aus der WO 03/030696 A1 ist eine Kaffeepadmaschine bekannt, die einen Bypass aus der Brühkammer zur Umgehung der Auslassdüse aufweist. Über diesen Bypass kann der zu brühende Kaffee verdünnt werden.

Es ist Aufgabe der Erfindung, eine Kaffeepadmaschine anzugeben, bei der sich ein Benutzer beim Öffnen der Brühkammer an einem Austritt von Heißwasser oder Dampf nicht verbrühen kann.

Bei der eingangs genannten Kaffeepadmaschine wird die Aufgabe durch einen Bypass bzw. eine Umgehungsteitung aus der Brühkammer zur Umgehung der Düse gelöst, der bzw. die vor dem Öffnen der Brühkammer über ein Ventil aktivierbar ist. Die Erfindung verfolgt also das Prinzip, einen eventuell noch vorhandenen Überdruck in der Brühkammer gezielt abzubauen, damit sich der Benutzer nicht verbrühen kann. Sie öffnet dazu einen Alternativweg für den Dampf aus der Brühkammer, so dass er einerseits nicht zwingend die Düse bzw. das Cremaventil passieren und sich andererseits nicht erst beim Öffnen der Brühkammer entspannen kann. Er wird vielmehr gezielt vom Benutzer weg abgeleitet. Da jedoch ein Überdruck für die Zubereitung des Kaffeegetränks in der Brühkammer erforderlich ist, kann der Bypass bzw. die Umgehungsleitung nicht schon zu Beginn des Kaffeebrühvorgangs geöffnet zur Verfügung stehen. Sie ist daher mit einem Ventil verschließbar, das erst nach Abschluss des Brühvorgangs den Bypass freigibt. Dadurch ist einerseits ein ausreichender Druck für die Zubereitung des Kaffeegetränks und andererseits eine druckentspannte Brühkammer beim Öffnungsvorgang sichergestellt.

Da der Druck in der Brühkammer überall gleichmäßig vorliegt, kann der Bypass grundsätzlich an einer beliebigen Stelle von der Brühkammer abzweigen. Nach einer vorteilhaften Ausgestaltung der Erfindung schließt sich der Bypass jedoch an der Oberseite der Brühkammer bzw. am Brühkammeroberteil an. Denn die Brühkammer wird in einer Richtung von oben nach unten von Heißwasser durchströmt, das auf seinem Weg durch die Brühkammer das Kaffeepad auslaugt und im Brühkammerunterteil das Kaffeegetränk bildet. Nach Abschluss des Brühvorgangs können daher im Brühkammerunterteil noch Reste von Kaffeegetränk vorliegen, die bei Aktivierung des Bypasses ggf. mit ausgespült werden könnten. Dies ist unerwünscht, weil dadurch sowohl der Bypass als auch sein Ventil verschmutzen und dadurch seine Funktion beeinträchtigt werden könnte. Im Brühkammeroberteil dürften dagegen bestenfalls Reste von Heißwasser oder Dampf vorliegen. Auch Heißwasser sollte möglichst nicht in den Bypass gelangen, führt aber jedenfalls nicht zu Verschmutzungen und Funktionsbeeinträchtigungen. Die Anordnung des Bypasses am Brühkammeroberteil reduziert also den Reinigungsbedarf der Kaffeepadmaschine und sorgt für eine höhere Lebensdauer.

Der Bypass hat den Zweck, einen eventuell noch vorhandenen Überdruck in der Brühkammer nach Abschluss des Zubereitungsvorgangs vom Benutzer weg zu entspannen. Er kann damit grundsätzlich in einer vom Benutzer abgewandten Seite der Kaffeemaschine münden. Da der Dampf jedoch auch Heißwasser mit sich führen kann, sollte er gezielt aufgegangen werden, um nicht die Umgebung der Kaffeepadmaschine zu beeinträchtigen. Nach einer weiteren vorteilhaften Ausgestaltung der Erfindung mündet der Bypass in eine Tropfschale der Kaffeepadmaschine. Die Tropfschale ist in der Regel unterhalb einer Tassenaufstellfläche angebracht und fängt verschüttetes oder übergetretenes Kaffeegetränk auf. Sie muss von Zeit zu Zeit ohnehin davon gereinigt werden. Mit ihr steht also ein nutzbares Auffangvolumen zur Verfügung, das einerseits für die Entspannung der Brühkammer ausreicht und andererseits ohnehin gewartet wird. Die Einleitung von Heißdampf bzw. Heißwasser in die Tropfschale kann sogar deren Reinigung begünstigen, da sie ggf. eingetrocknete Kaffeegetränkreste zumindest anlöst. Die Tropfschale kombiniert damit mehrere Funktionen, nämlich einerseits das Auffangen verschütteten Getränks und andererseits die Aufnahme von Kondensat oder Heißwasser aus der Entspannung der Brühkammer. Ein separater Auffangraum für entspannten Dampf und ggf. Heißwasser ist damit entbehrlich, was die Herstellungskosten der Kaffeepadmaschine reduziert.

Das Ventil, das den Bypass freigibt, kann wegen der grundsätzlich gleichmäßigen Druckausbreitung an nahezu jeder beliebigen Stelle innerhalb des Bypasses angeordnet sein. Nach einer vorteilhaften Ausgestaltung der Erfindung ist es zumindest brühkammernah, wenn nicht sogar im Brühkammeroberteil angeordnet. Es sollte dort von einer Innenseite der Brühkammer aus zugänglich sein, damit es für Reinigungszwecke leicht erreichbar ist. Damit kann seine zuverlässige Funktion sichergestellt und es kann bei einer Funktionsstörung leicht repariert werden.

Der Bypass samt seinem Ventil erfüllt nur dann seine Funktion korrekt, wenn er während des Brühvorgangs geschlossen, das Ventil also inaktiv und erst nach Abschluss der Getränkezubereitung aktiviert wird. Nach einer weiteren vorteilhaften Ausgestaltung der Erfindung kann daher das Ventil elektrisch ansteuerbar sein, so dass es gezielt nach Abschluss des Brühvorgangs bedienbar ist. Durch eine entsprechende Steuerung der Kaffeepadmaschine kann also nach Abschluss des Brühvorgangs ein Aktuator am Ventil elektrisch betätigt werden, der das Ventil öffnet und damit den Bypass aktiviert. Die elektrische bzw. elektronische Bedienbarkeit des Ventils stellt eine zuverlässige Entspannung der Brühkammer sicher. Damit muss der Benutzer keinen zusätzlichen Bedienungsschritt vornehmen, den er zu seinem Nachteil vergessen könnte. Dadurch gewinnt die Kaffeepadmaschine an Komfort und Bedienungssicherheit.

Ein einfacher Aktuator, der das Ventil stromgesteuert öffnet, kann in einem strombeaufschlagbaren Memorydraht zur Bedienung des Ventils bestehen. Der Memorydraht kann beispielsweise auf einen Stromdurchfluss mit einer Erwärmung und seiner Verkürzung infolgedessen reagieren. Die Verkürzung kann dazu benutzt werden, dass das Ventil gegen die Kraft einer Feder geöffnet wird. Nach Beendigung des Stromdurchflusses kühlt der Memorydraht ab und gewinnt wieder seine ursprüngliche Länge. Dabei drückt die Feder das Ventil wieder in den geschlossenen Zustand. Der Memorydraht stellt einen besonders einfachen Aktuator des Ventils dar.

Alternativ oder zusätzlich kann die Aktivierung des Ventils auch mechanisch erfolgen. Damit kann eine höhere Sicherheit erzielt werden, die allerdings einen zusätzlichen Bedienungsschritt erfordern kann. Nach einer weiteren vorteilhaften Ausgestaltung der Erfindung kann das Ventil mit dem Bedienungshebel der Kaffeepadmaschine mechanisch derart gekoppelt sein, dass beim Öffnungsvorgang der Brühkammer zuerst das Ventil und erst anschließend die Brühkammer geöffnet wird. Die mechanische Kopplung erübrigt einen zusätzlichen Bedienungsschritt, was zu einer komfortablen Benutzung der Kaffeemaschine beiträgt. Da der separate Bedienungsschritt entfällt, kann er auch nicht versehentlich vergessen werden. Dies trägt zur Bedienungssicherheit der Kaffeepadmaschine bei. Die mechanische Kopplung ist darüber hinaus konstruktiv relativ einfach zu bewerkstelligen, indem beim Öffnungsvorgang in einem ersten Bewegungsabschnitt des Bedienungshebels das Ventil aktiviert und erst in einem zweiten Bewegungsabschnitt die Brühkammer geöffnet wird. Durch die Konstruktion kann also eine zwingende zeitliche Reihenfolge zwischen dem Aktivieren des Ventils und damit der Entspannung der Brühkammer und dem Öffnen derselben festgelegt werden. Die mechanische Kopplung hat darüber hinaus noch den Vorteil, dass sie auch dann zu einer frühzeitigen Entspannung der Brühkammer führt, falls sie vor Abschluss der Getränkezubereitung unsachgemäß, z. B. durch ein spielendes Kind, geöffnet werden sollte. Damit erhält die Kaffeepadmaschine eine Bedienungssicherung sogar im Falle eines erheblichen Bedienungsfehlers.

Das Prinzip der Erfindung wird anhand einer Zeichnung beispielshalber noch näher erläutert. In der Zeichnung zeigen:
- Figur 1: eine Kaffeepadmaschine,
- Figur 2: einen Schnitt durch ein Oberteil der Kaffeepadmaschine, und
- Figur 3: eine alternative Teilschnittdarstellung gemäß Figur 2.

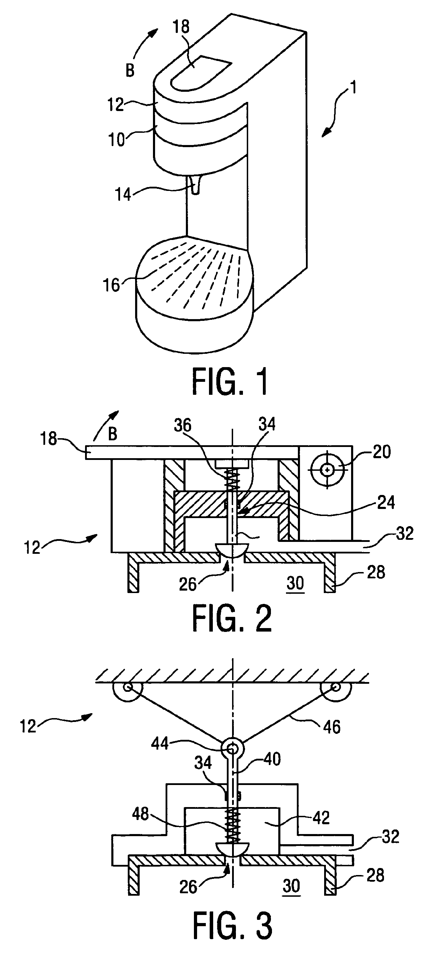

Figur 1 zeigt ein Beispiel einer Kaffeepadmaschine 1 mit einer horizontal entnehmbaren Schublade 10 zur Aufnahme eines Brühkammerunterteils. In dem darüber angeordneten Geräteoberteil 12 ist ein Brühkammeroberteil gemäß Figuren 2 und 3 integriert. Das in der nicht dargestellten Brühkammer zubereitete Kaffeegetränk verlässt die Kaffeepadmaschine 1 durch eine Düse, ein so genanntes Cremaventil 14. Das Kaffeegetränk wird in eine nicht dargestellte Tasse abgegeben, die auf einer Tassenabstellfläche 16 platziert werden kann. Unterhalb der perforierten Abstellfläche 16 befindet sich eine nicht dargestellte Tropfenauffangschale, die verschüttetes Getränk aufnimmt und zur Reinigung entnehmbar ist.

Zur Zubereitung eines Kaffeegetränks muss zunächst die Brühkammer geöffnet werden, um ein Kaffeepad einlegen zu können. Dazu ist ein Bedienungshebel 18 im Geräteoberteil 12 in der Richtung des Pfeils B nach oben zu klappen. Dadurch werden das stationäre Brühkammeroberteil im Gehäuseoberteil 12 und das zusammen mit der Schublade 10 entnehmbare Brühkammerunterteil voneinander und aus ihrer druckdichten Verriegelung gelöst.

Figur 2 zeigt einen Teilschnitt durch das Gehäuseoberteil 12. Der Bedienungshebel 18 ist an einem Drehgelenk 20 im Gehäuseoberteil 12 gelenkig gelagert, so dass er von einer dargestellten Schließposition in Richtung des Pfeils B um etwa 90° in eine Öffnungsposition verschwenkt werden kann. An seine Unterseite schließt ein Stößel 22 eines Ventils 24 an, den eine Feder 36 gegen den Bedienungshebel 18 vorspannt. Der Stößel 22 durchdringt eine Dichtung 34 und verschließt eine Mündung 26. Die Mündung 26 befindet sich zentral in einem Brühkammeroberteil 28, das zusammen mit einem nicht dargestellten Brühkammerunterteil einen Brühraum 30 einer Brühkammer einschließt. Die Mündung 26 stellt die Verbindung zwischen dem Brühraum 30 und einem Bypass 32 her.

Nach Abschluss eines Brühvorgangs zur Zubereitung eines Kaffeegetränks sollte der Benutzer das dafür verwendete Kaffeepad aus der Brühkammer entnehmen. Dazu muss er die druckdichte Verriegelung zwischen dem Brühkammeroberteil 28 und dem Brühkammerunterteil lösen. Dieses geschieht über eine nicht dargestellte Mechanik, die die anschließende Entnahme des Brühkammerunterteils zusammen mit der Schublade 10 ermöglicht.

Die Entriegelung der Brühkammer erfolgt über den Bedienungshebel 18, indem er in Richtung B nach oben geschwenkt wird. Bevor jedoch die Entriegelungsmechanik betätigt wird, zieht der Bedienungshebel 18 den Stößel 22 des Ventils 24 von seinem Ventilsitz auf der Mündung 26 ab. Dadurch wird die Mündung 26 freigegeben, so dass der Brühraum 30 und der Bypass 32 fluidisch miteinander verbunden werden. Aus dem Zubereitungsvorgang eventuell noch vorhandener Überdruck im Brühkammerraum 30 kann jetzt über den Bypass 32 austreten. Der Bypass 32 ist vom Benutzer weggerichtet, so dass zusammen mit dem Überdruck eventuell mitgeführter Heißdampf oder Heißwasser ihn nicht verbrühen können.

Diese Entspannung des Brühraums 30 der Brühkammer erfolgt in einem ersten Bedienungsabschnitt, indem der Bedienungshebel 18 zunächst nur um einen Winkel von wenigen, beispielsweise 10 bis 20° in Richtung B angehoben wird. In einem zweiten Bedienungsschritt, in dem er in eine senkrechte Stellung, also einen Winkel von 90° bewegt wird, erfolgt die Entriegelung der Brühkammer und die Freigabe der Schublade 10. Da die Brühkammer jetzt druckentspannt ist, kann den Benutzer kein austretender Heißdampf oder Heißwasser treffen.

Bei einem Verschließen der Kaffeepadmaschine durch Bewegen des Bedienungshebels 18 entgegen der Richtung B verschließt das Ventil 24 die Mündung 26, so dass aus dem Brühraum 30 kein Getränk und insbesondere kein Druck durch den Bypass 32 entweichen kann. Die Kaffeepadmaschine 1 ist damit bereit für einen weiteren Zubereitungsvorgang.

Figur 2 zeigt ein Beispiel für eine mechanische Kopplung des Bedienungshebels 18 mit dem Ventil 24, das den Bypass 32 verschließt. Die mechanische Kopplung gibt eine zwingende zeitliche Reihenfolge vor, wonach bei einem Öffnungsvorgang zuerst das Ventil 24 geöffnet und der Brühkammerraum 30 druckentspannt wird, bevor die Brühkammer selbst geöffnet wird. Diese mechanische Kopplung des Bedienungshebels 18 mit dem Ventil 24 sorgt dafür, dass eine Druckentspannung auch dann erfolgt, wenn die Kaffeepadmaschine 1 fehlerhafterweise während eines laufenden Getränkezubereitungsvorgangs geöffnet wird.

Figur 3 bietet eine Teilschnittansicht durch das Geräteoberteil 12, vergleichbar der Darstellung in Figur 2. Auch das dortige Brühkammeroberteil 28 umschließt zusammen mit einem nicht dargestellten Brühkammerunterteil einen Brühraum 30. Das Brühkammeroberteil 28 weist eine Mündung 26 auf, die den Brühkammerraum 30 mit dem Bypass 32 verbindet. Im Unterschied zu Figur 2 verschließt die Mündung 26 ein Stößel 40 eines federkraftbetätigten Ventils 42. An seinem der Mündung 26 gegenüberliegenden Ende weist der Stößel 40 eine Öse 44 auf, an der er über einen Memorydraht 46 als Aktuator des Ventils 42 am Gehäuseoberteil 12 dreiecksförmig abgespannt ist.

Eine Feder 48 drückt den Stößel 40 auf die Mündung 26, so dass das Ventil 42 den Bypass 32 verschließt. Figur 3 stellt also den Normalzustand bzw. die Schließstellung des Ventils 42 dar. Zur Aktivierung des Ventils 42 wird Strom durch den Memorydraht 46 geschickt. Der Stromdurchfluss erhitzt den Memorydraht 46 und verkürzt ihn zugleich. Der Memorydraht 46 zieht infolgedessen den Stößel 40 entgegen der Federkraft 48 von der Mündung 26 ab. Damit ist der Weg zwischen dem Brühkammerraum 30 und dem Bypass 32 freigegeben, das Ventil 42 also aktiviert. Wird der Stromfluss durch den Memorydraht 46 abgeschaltet, so kühlt der Draht 46 ab und geht in seinen ursprünglichen, längeren Zustand über. Dann drückt die Feder 48 den Stößel 40 wieder auf die Mündung 26 und trennt den Bypass 32 vom Brühkammerinnenraum 30. Das Ventil ist damit geschlossen, ein Druckabbau innerhalb des Brühraums 30 durch den Bypass 32 ist nicht mehr möglich.

Da es sich bei den vorhergehenden, detailliert beschriebenen Kaffeepadmaschinen um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der mechanischen Kopplung von Ventil und Bedienungshebel in anderer Form als in der hier beschriebenen erfolgen.

Ebenso kann der elektrische Aktuator in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Kaffeepadmaschine
- 10: Schublade
- 12: Geräteoberteil
- 14: Cremaventil
- 16: Tassenaufstellfläche
- 18: Bedienungshebel
- 20: Drehgelenk
- 22: Stößel
- 24: Ventil
- 26: Mündung
- 28: Brühkammeroberteil
- 30: Brühraum
- 32: Bypass
- 34: Dichtung
- 36: Feder
- 40: Stößel
- 42: Ventil
- 44: Öse
- 46: Memorydraht
- 48: Feder

- B: Öffnungsrichtung

## Patentansprüche

1. Kaffeepadmaschine (1) mit einer Brühkammer zur Aufnahme und zum Auslaugen eines Kaffeepads, mit einem Bedlenungshebel (18) zum Öffnen/Verschließen der Brühkammer, mit einer Düse (14) zur Abgabe eines Kaffeegetränks unter Druck,
**gekennzeichnet durch** einen mit einem Ventil verschließbaren Bypass (32) aus der Brühkammer (28, 30) zur Umgehung der Düse (14),
der erst nach Abschluss des Brühvorgangs und vor dem Öffnen der Brühkammer über das Ventil (24; 42) aktivierbar ist.

2. Kaffeepadmaschine (1) nach Anspruch 1 oder 2, **dadurch gekennzeichnet, dass** der Bypass (32) an einer Oberseite der Brühkammer (28, 30) anschließt.

3. Kaffeepadmaschine (1) nach einem der obigen Ansprüche, **dadurch gekennzeichnet, dass** der Bypass (32) in eine Tropfschale mündet.

4. Kaffeepadmaschine (1) nach einem der obigen Ansprüche, **dadurch gekennzeichnet, dass** das Ventil (24; 42) im Bypass (32) brühkammernah angeordnet ist.

5. Kaffeepadmaschine (1) nach einem der Ansprüche 1 bis 4, **gekennzeichnet durch** eine elektrische Bedienbarkeit des Ventils (42) nach Abschluss des Brühvorgangs.

6. Kaffeepadmaschine (1) nach Anspruch 5, **gekennzeichnet durch** einen strombeaufschlagbaren Memorydraht (46) zur Bedienung des Ventils (42).

7. Kaffeepadmaschine (1) nach einem der obigen Ansprüche, **gekennzeichnet durch** eine mechanische Kopplung des Bedienungshebels (18) mit dem Ventil (24) derart, dass beim Öffnungsvorgang der Brühkammer (28, 30) zuerst das Ventil (24) und erst anschließend die Brühkammer (28, 30) geöffnet wird.

## Claims

1. Coffee pod machine (1) having a brewing chamber for receiving and extracting from a coffee pod, having an operating lever (18) for opening/closing the brewing chamber, having a nozzle (14) for dispensing a coffee beverage under pressure, **characterised by** a bypass (32), which can be closed off by a valve, from the brewing chamber (28, 30) to bypass the nozzle (14),
which can only be activated after completion of the brewing process and before the opening of the brewing chamber by way of the valve (24; 42).

2. Coffee pod machine (1) according to claim 1 or 2, **characterised in that** the bypass (32) adjoins an upper face of the brewing chamber (28, 30).

3. Coffee pod machine (1) according to one of the preceding claims, **characterised in that** the bypass (32) opens into a drip tray.

4. Coffee pod machine (1) according to one of the preceding claims, **characterised in that** the valve (24; 42) is arranged in the bypass (32) in proximity to the brewing chamber.

5. Coffee pod machine (1) according to one of claims 1 to 4, **characterised by** the ability of the valve (42) to be operated electrically after completion of the brewing process.

6. Coffee pod machine (1) according to claim 5, **characterised by** an energizable memory wire (46) for operation of the valve (42).

7. Coffee pod machine (1) according to one of the preceding claims, **characterised by** a mechanical coupling between the operating lever (18) and the valve (24), such that during the process of opening the brewing chamber (28, 30) the valve (24) is opened first and only after this is the brewing chamber (28, 30) opened.

## Revendications

1. Machine à dosette de café (1) comprenant une chambre d'infusion destinée à recevoir une dosette de café et à en extraire le café, comprenant un levier de manoeuvre (18) pour l'ouverture/fermeture de la chambre d'infusion et une buse (14) pour délivrer un café sous pression,
**caractérisée par** une dérivation (32) pouvant être fermée par une soupape, partant de la chambre d'infusion (28, 30) pour contourner la buse (14), dérivation qui peut être activée par le biais de la soupape (24; 42) seulement après que le processus d'infusion est terminé et avant l'ouverture de la chambre d'infusion.

2. Machine à dosette de café (1) selon la revendication 1 ou 2, **caractérisée en ce que** la dérivation (32) est adjacente à un côté supérieur de la chambre d'infusion (28, 30).

3. Machine à dosette de café (1) selon l'une des revendications ci-dessus, **caractérisée en ce que** la dérivation (32) débouche dans un bac récupérateur de gouttes.

4. Machine à dosette de café (1) selon l'une des revendications ci-dessus, **caractérisée en ce que** la soupape (24; 42) est disposée dans la dérivation (32) près de la chambre d'infusion.

5. Machine à dosette de café (1) selon l'une des revendications 1 à 4, **caractérisée par** une possibilité de commande électrique de la soupape (42) une fois que le processus d'infusion est terminé.

6. Machine à dosette de café (1) selon la revendication 5, **caractérisée par** un fil à mémoire de forme (46) auquel un courant peut être appliqué pour commander la soupape (42).

7. Machine à dosette de café (1) selon l'une des revendications ci-dessus, **caractérisée par** un accouplement mécanique du levier de manoeuvre (18) avec la soupape (24) de telle sorte que, lors du processus d'ouverture de la chambre d'infusion (28, 30), la soupape (24) s'ouvre en premier et la chambre d'infusion (28, 30) est ouverte seulement après.
